# EUROPÄISCHE PATENTANMELDUNG

(11) **EP 1 026 055 A2**
(43) Veröffentlichungstag der Anmeldung: **09.08.2000**
(21) Anmeldenummer: 00100514.9
(22) Anmeldetag: 12.01.2000
(51) Int. Cl.: B60S 1/24

(54) **Scheibenwischeranlage mit frei beweglichen Schwingen**

(30) Priorität: 04.02.1999 DE 19904517
(71) Anmelder: Volkswagen Aktiengesellschaft, 38436 Wolfsburg (DE)
(72) Erfinder: Ostrowski, Wolfgang, 38446 Wolfsburg (DE)

(57) **Zusammenfassung**

Die Erfindung betrifft eine Scheibenwischeranlage für Kraftfahrzeuge mit zwei Wischerblättern, die über ein Kurbelgelenkgetriebe angetrieben werden, bei der am freien Ende einer von einem Motor angetriebenen Kurbel (1) ein Verbindungsglied (2) angeordnet ist, das einen oberen Kugelabschnitt (3) und einen unteren Kugelabschnitt (3') umfaßt, und eine erste Schwinge (8) an dem oberen Kugelabschnitt (3) beweglich mit dem Verbindungsglied (2) verbunden ist und eine zweite Schwinge (8') an dem unteren Kugelabschnitt (3') beweglich mit dem Verbindungsglied (2) verbunden ist.

Um eine Scheibenwischeranlage zu schaffen, bei der die rotatorische Antriebsbewegung eines Antriebsmotors auf mehrere Schwingen übertragen wird, ohne daß es zu einer Blockierung kommt, wird vorgeschlagen, daß der obere Kugelabschnitt (3) und der untere Kugelabschnitt (3') in Bezug auf eine Linie senkrecht zu dem durch die Kurbel (1) beschriebenen Kreis zueinander versetzt angeordnet sind.

## Beschreibung

Die Erfindung betrifft eine Scheibenwischeranlage für Kraftfahrzeuge mit zwei Wischerblättern, die über ein Kurbelgelenkgetriebe angetrieben werden. Insbesondere betrifft die Erfindung eine Scheibenwischeranlage, bei der am freien Ende einer von einem Motor angetriebenen Kurbel ein Verbindungsglied angeordnet ist, das einen oberen Kugelabschnitt und einen unteren Kugelabschnitt umfaßt, und bei dem eine erste Schwinge an dem oberen Kugelabschnitt beweglich mit dem Verbindungsglied verbunden ist und eine zweite Schwinge an dem unteren Kugelabschnitt beweglich mit dem Verbindungsglied verbunden ist.

Die Verwendung von Antriebskurbeln für Scheibenwischeranlagen ist bekannt. Im Stand der Technik werden die beiden Wischer an einem Kugelkopf befestigt. In DE 42 20 673 wird eine Scheibenwischeranlage an der Front- oder Heckscheibe von Kraftfahrzeugen mit zwei gleichzeitig und gegensinnig drehenden Wischerblättern beschrieben, die gegeneinander versetzt angeordnet und über ein Kurbelgelenkgetriebe angetrieben sind. Bei der genannten Scheibenwischeranlage ist am freien Ende einer von einem Motor angetriebenen Kurbel ein Exzenterbolzen derart angeordnet, daß in der Wischerausgangslage der Antriebsmittelpunkt des Motors einerseits mit dem Mittelpunkt des mit der Kurbelstange gelenkig verbundenen Exzenterbolzens und mit dem Mittelpunkt des Gelenkes Kurbelstange/Wischerarm und andererseits mit dem Mittelpunkt des Gelenkes Kurbel/Kurbelstange und mit den Mittelpunkten des Gelenkes Kurbelstange/Winkelhebel je eine Gerade bilden.

Daraus ergibt sich aber das Problem, daß beide Wischer ihre Umkehrpunkte zur gleichen Zeit erreichen. Bei gegenläufig drehenden Wischern können sich somit die Wischer im Bereich der Umkehrpunkte gegenseitig berühren und/oder behindern.

Aufgabe der vorliegenden Erfindung ist es, eine Scheibenwischeranlage zu schaffen, bei der die rotatorische Antriebsbewegung eines Antriebsmotors auf mehrere Schwingen übertragen wird, ohne daß es zu einer Blockierung kommt.

Die Aufgabe wird durch eine Antriebskurbel mit angepaßter Wirklänge mit den Merkmalen nach Anspruch 1 gelöst. Der Unteranspruch bezieht sich auf eine bevorzugte Ausführungsform der Erfindung.

Der Erfindung liegt die Idee zugrunde, den Bewegungsablauf der Schwingen derart zu ändern, daß ein Vor- oder Nachlauf einzelner Schwingen erreicht wird. Mit anderen Worten, die Schwingen erreichen zu einem etwas unterschiedlichen Zeitpunkt ihre jeweils extreme Auslenkung. Die erfindungsgemäße Scheibenwischeranlage für Kraftfahrzeuge mit zwei Wischerblättern, die über ein Kurbelgelenkgetriebe angetrieben werden, wobei am freien Ende einer von einem Motor angetriebenen Kurbel ein Verbindungsglied angeordnet ist, das einen oberen Kugelabschnitt und einen unteren Kugelabschnitt umfaßt, und eine erste Schwinge an dem oberen Kugelabschnitt beweglich mit dem Verbindungsglied verbunden ist und eine zweite Schwinge an dem unteren Kugelabschnitt beweglich mit dem Verbindungsglied verbunden ist, ist dadurch gekennzeichnet, daß der obere Kugelabschnitt und der untere Kugelabschnitt in Bezug auf eine Linie senkrecht zu dem durch die Kurbel beschriebenen Kreis zueinander versetzt angeordnet sind.

Insbesondere sind die Kugelabschnitte in einer Ebene senkrecht auf der Kurbel angeordnet.

Ein Vorteil der erfindungsgemäßen Scheibenwischeranlage besteht darin, daß sie einen einfachen Aufbau hat, so daß sie unkompliziert und kostengünstig in der Herstellung ist und eine hohe Zuverlässigkeit gewährleistet ist.

Weitere Merkmale und Vorteile der Erfindung ergeben sich aus der folgenden Beschreibung bevorzugter Ausführungsformen der Erfindung, wobei Bezug genommen wird auf die beigefügten Zeichnungen.
- Fig. 1: zeigt perspektivisch eine Ausführungsform der Kurbel mit einem Verbindungsglied der erfindungsgemäßen Scheibenwischeranlage.
- Fig. 2A und 2B: zeigen die wesentlichen Bewegungslinien einer Scheibenwischeranlage nach dem Stand der Technik und gemäß der Erfindung.

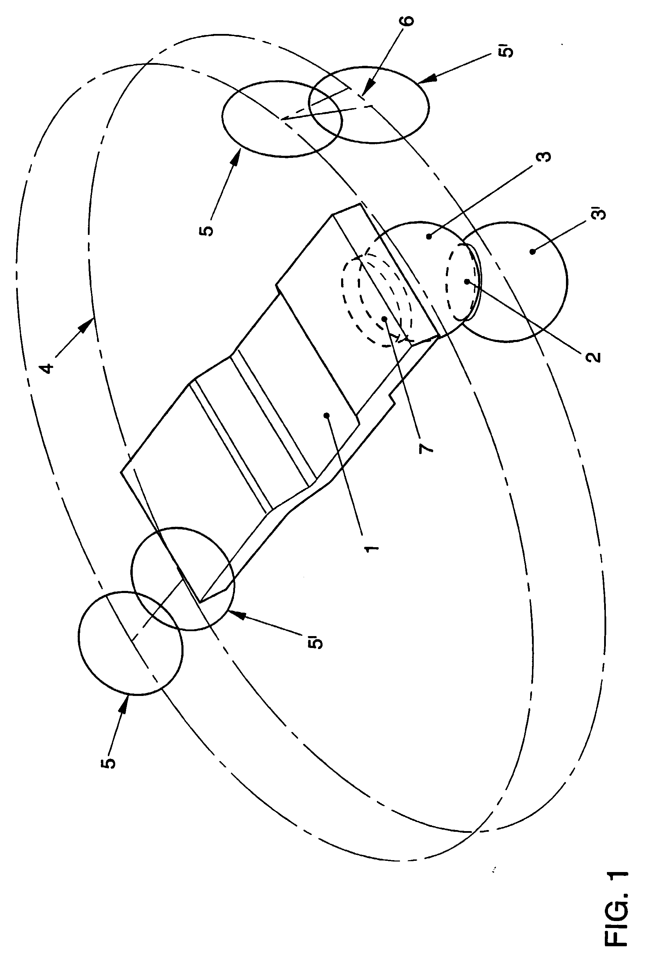

Die Ausführungsform der erfindungsgemäßen Scheibenwischeranlage nach Fig. 1 umfaßt eine Kurbel 1, die die Rotationsbewegung des (nicht dargestellten) Antriebsmotors auf die Schwingen der Scheibenwischeranlage überträgt. An der Kurbel sind (nicht gezeigte) Antriebsstangen für die Wischer über ein Verbindungsglied 2 an ihrem Ende beweglich befestigt. Das Verbindungsglied 2 weist zwei Kugelabschnitte 3 und 3' auf, die übereinander angeordnet sind. Die jeweilige Schwinge (nicht dargestellt) umfaßt an ihrem antriebsseitigen Ende eine Kugelpfanne 7, die den Kugelabschnitt 3 bzw. 3' aufnimmt. So ist die Schwinge in einer Ebene, die parallel zu dem durch die Kurbel 1 beschriebenen Kreis liegt, frei beweglich. Die untere Antriebsstange oder Schwinge 8' kann insbesondere über eine (nicht dargestellte) einfache Öse zwischen dem Ende der Kurbel 1 und dem unteren Kugelabschnitt 3' an dem Verbindungsglied 2 befestigt sein.

Bei einer Anordnung, bei der die beiden Kugelabschnitte 3 und 3' wie beim Stand der Technik angeordnet sind, also übereinander in einer Linie senkrecht zu dem Kreis, der durch die Kurbel beschrieben wird, erreichen beide Schwingen zeitgleich ihre Extrempositionen. Dadurch kann es zu Behinderungen bei dem Durchfahren des Antriebskreises kommen, nämlich insbesondere dann, wenn die Extrempositionen erreicht sind. Bereits aufgrund von minimalen Verkantungen der Schwingen kann eine weitere Bewegung des Kurbelgelenkgetriebes unmöglich sein.

Um den Bewegungsablauf der Schwingen so zu ändern, daß ein Vor- oder Nachlauf einzelner Schwingen erreicht wird, werden der obere Kugelabschnitt 3 und der untere Kugelabschnitt 3' erfindungsgemäß in Bezug auf eine Linie senkrecht zu dem durch die Kurbel 1 beschriebenen Kreis zueinander versetzt angeordnet. Die Kugelabschnitte haben also in der Projektion auf die Kreisbahn der Kurbel 1 einen Abstand voneinander. Dieser Nachlauf des einen Kugelabschnitts gegenüber dem anderen ist in Fig. 1 mit 6 bezeichnet. Beide Kugelabschnitte 3 und 3' liegen in einer Ebene, die senkrecht zu der Kurbel 1 steht. Ihre Projektion auf die momentane Ebene ist an jedem Ort auf der Kreisbahn ein Kreis 5 bzw. 5'. Der Mittelpunkt jedes der beiden Kreise 5 und 5' beschreibt seinerseits jeweils einen gleich großen Kreis um die Achse des Antriebsmotors. Der obere Kreis ist mit 4 bezeichnet, der untere Kreis ist mit 4' bezeichnet. Die beiden Kreise 4 und 4' liegen zwar wie beim Stand der Technik übereinander. Der wesentliche Unterschied zum Stand der Technik besteht jedoch darin, daß die angetriebenen Schwingen eine bestimmte Position auf dem Antriebskreis 4 bzw. 4' zu unterschiedlichen Zeiten erreichen. Die beiden Kugelgelenke haben also in der Hauptwirkrichtung einen Mittelpunktversatz und bilden einen Körper. Sie sind überlappend angeordnet, so daß sie sich in Schräglage auf ein und demselben Radius befinden. Dadurch erhält man zwei winklig gegeneinander versetzte Antriebspunkte. Während der eine Wischer sich bereits im Umkehrpunkt befindet, ist der andere Wischer noch kurz davor bzw. schon etwas weiter.

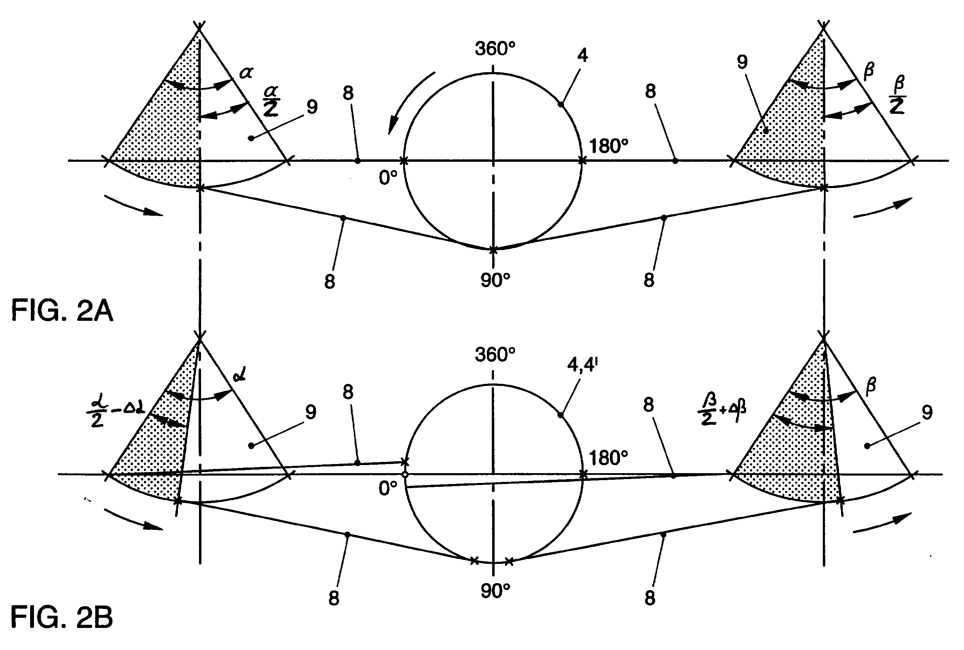

Ein Vergleich zwischen den wesentlichen Bewegungslinien bei einer Scheibenwischeranlage nach dem Stand der Technik und einer Ausführungsform der Scheibenwischeranlage gemäß der vorliegenden Erfindung ist in Fig. 2A und 2B dargestellt. Fig. 2A zeigt die Bewegungslinien beim Stand der Technik. Die beiden Schwingen 8 und 8' treiben die beiden Wischer 9 und 9' an. In der dargestellten Form bewegen sich die beiden Wischer 9 und 9' gleichsinnig, d.h. sie erreichen zum gleichen Zeitpunkt ihre jeweilige Extremposition. Der Antriebskreis der beiden Kugelabschnitte 3 und 3' ist mit 4 bezeichnet. Es sind eine Extremposition und eine mittlere Position der Scheibenwischeranlage dargestellt.

Fig. 2B zeigt die wesentlichen Bewegungslinien bei der Ausführungsform der erfindungsgemäßen Scheibenwischeranlage nach Fig. 1 in einer Extremposition und einer mittleren Position. Die beiden Wischer werden wie in Fig. 2A durch die beiden Schwingen 8 und 8' angetrieben. Bei beiden Schwingen 8 bzw. 8' liegen aber im Gegensatz zu dem Stand der Technik die Angriffspunkte der Schwingen 8 bzw. 8' in der Projektion nicht mehr übereinander, sonder sind entlang der Kreisbahn 4 bzw. 4' versetzt. Mit anderen Worten, es ergibt sich eine Verschiebung der relativen Lage der beiden Schwingen 8 und 8' zueinander, beide Schwingen erreichen zu unterschiedlichen Zeitpunkten eine vorgegeben Auslenkung. Dies ist in Fig. 2A durch die schattierten, unterschiedlich großen Segmente der von dem Wischer überstrichenen Fläche angedeutet. Während der linke Wischer 9 die mittlere Position bei 90° noch nicht erreicht hat, die schattierte Fläche links also noch kleiner als die Hälfte der gesamten von Wischer 9 überstrichenen Fläche ist, hat der rechte Wischer 9' die mittlere Position bei 90° bereits überschritten, die schattierte Fläche rechts ist als bereits größer als die Hälfte der gesamten von Wischer 9' überstrichenen Fläche.

### BEZUGSZEICHENLISTE

- 1: Kurbel
- 2: Verbindungsglied
- 3: oberer Kugelabschnitt, 3' unterer Kugelabschnitt
- 4: erste Kreisbahn, 4' zweite Kreisbahn
- 5: Projektion des oberen Kugelabschnitts, 5' Projektion des unteren Kugelabschnitts
- 6: Nachlauf
- 7: Kugelpfanne von Schwinge
- 8: erste Schwinge, 8' zweite Schwinge
- 9: erster Wischer, 9' zweiter Wischer

## Patentansprüche

1. Scheibenwischeranlage für Kraftfahrzeuge mit zwei Wischerblättern, die über ein Kurbelgelenkgetriebe angetrieben werden, wobei am freien Ende einer von einem Motor angetriebenen Kurbel (1) ein Verbindungsglied (2) angeordnet ist, das einen oberen Kugelabschnitt (3) und einen unteren Kugelabschnitt (3') umfaßt, und eine erste Schwinge (8) an dem oberen Kugelabschnitt (3) beweglich mit dem Verbindungsglied (2) verbunden ist und eine zweite Schwinge (8') an dem unteren Kugelabschnitt (3') beweglich mit dem Verbindungsglied (2) verbunden ist,
**dadurch gekennzeichnet**, daß
der obere Kugelabschnitt (3) und der untere Kugelabschnitt (3') in Bezug auf eine Linie senkrecht zu dem durch die Kurbel (1) beschriebenen Kreis zueinander versetzt angeordnet sind.

2. Scheibenwischeranlage nach Anspruch 1,
**dadurch gekennzeichnet**, daß
die Kugelabschnitte (3, 3') in einer Ebene senkrecht auf der Kurbel (1) angeordnet sind.
